# EUROPEAN PATENT SPECIFICATION

(11) **EP 4 144 418 B1**
(45) Date of publication and mention of the grant of the patent: **20.11.2024**
(21) Application number: 21194918.5
(22) Date of filing: 03.09.2021
(51) Int. Cl.: B62J 27/20, A62B 33/00

(54) **BACKPACK FOR FALL PROTECTION**
RUCKSACK FÜR STURZSICHERUNG
SAC À DOS POUR PROTECTION CONTRE LES CHUTES

(43) Date of publication of application: 08.03.2023
(73) Proprietor: EVOC Sports GmbH, 81541 München (DE)
(72) Inventor: Feist, Holger, 81541 München (DE); Schwarz, Anne, 81541 München (DE); Scherer, Simon, 81541 München (DE)
(74) Representative: Maiwald GmbH

(56) References cited:
- EP-A1- 3 812 011
- WO-A1-00/32274
- WO-A1-2009/121213
- WO-A1-2023/025495
- CN-A- 102 835 753
- CN-A- 105 495 961
- CN-A- 105 495 981
- US-A1- 2007 056 500

## Description

### FIELD OF THE INVENTION

The invention provides a backpack for fall protection comprising an airbag that, in an inflated state, protects the user wearing the backpack when the user falls, for example from a bike.

### BACKGROUND

Protection against accidents, in particular, falls that occur when travelling by bike or during similar activities, have become increasingly important and concern several body parts of the user. Helmets for protecting the head have been known for a long time.

However, compared to protecting the head, it may often be difficult to protect other areas of the body sufficiently without significantly impeding the user, in particular, when it comes to activities that are part of the user's day-to-day behavior, which may particularly pertain to mobility, for example travelling to the workplace by bike or other similar activities that may require protection.

WO 00/32274 A1 discloses an avalanche life-preserving jacket with an airbag.

CN 105 495 981 A discloses a backpack with airbags stowed in the shoulder straps.

### SUMMARY

It is an object of the present invention to increase a user's flexibility in terms of reliably protecting body parts other than the head.

This problem, among others, is solved by the subject matter of the independent claims. Preferred embodiments are laid down in the dependent claims.

### GENERAL DESCRIPTION

The invention provides a backpack for fall protection according to claim 1.

The airbag may, in particular, be removably stowed in the backpack. The storage space may also be referred to as airbag compartment or airbag pocket.

The release module may comprise a sensor unit comprising one or more sensors, in particular, an acceleration sensor and/or a gyroscope and/or a magnetometer and/or barometer, and the control unit may be configured to receive sensor data from the sensor unit and, based on the sensor data, detect the fall of the user.

The advantage of the claimed backpack is that it may provide reliable protection for different regions of the user's body other than the head region, in particular of the shoulder region, the breast region, or the cervical spine region.

In the present disclosure, all position-related and orientation-related features, particularly specifying upper or lower parts, refer to an assembled state of the backpack and arrangement for the intended use of the backpack, particularly as worn by a user.

It is noted that the automatic inflation in response to detecting a fall of the user, in particular due to the use of the gas cartridge, allows for a sufficiently fast response of the airbag when an accident occurs. A manual release of the airbag, in accident situations, will not be fast enough to provide protection of the user. Drawing air from the surroundings, rather than using gas from the gas cartridge for inflation will also generally not be fast enough.

The airbag, as compared to protector plates or other conventional protectors, provides reliable protection of different body parts without impeding a user. Moreover, it is advantageous to provide the airbag as part of a backpack compared to, for example, providing an airbag attached to the user as a separate entity, e.g. as a wearable or a piece of clothing, because a backpack will often already be part of the user's routine, thereby increasing the chances that the protection will actually be used. Moreover, the backpack will generally not be covered, thereby ensuring that inflation of the airbag will not be obstructed and that protection of the user is reliable at all times. Specifically, for example if the airbag were to be stowed in a vest or in a jacket, in case the user puts any other piece of clothing or a bag or backpack on top of the vest or jacket, the airbag will not inflate properly and will not provide sufficient protection for the user. This makes protection unreliable.

Thus, a user's flexibility in terms of reliably protecting body parts other than the head can be increased without impeding the user.

In the following, several aspects regarding the preferred embodiments of the backpack will be described in detail. It is noted that all these aspects contribute to the overall solution of allowing for the airbag to be stowed away in a backpack in such a manner that it can reliably be inflated in a timely manner when an accident occurs, more specifically be released from where it is stowed, be fully inflated, and take the shape that is required to provide the protection reliably and fast enough to protect the user upon falling.

The backpack may have a modular configuration. In particular, the airbag may be entirely removable from the remaining parts of the backpack. Alternatively or in addition the release module may be removable from the remaining parts of the backpack. Alternatively or in addition the gas cartridge may be detachably fixed to the other elements of the release module, particularly to the sensor unit and/or the control unit. The control unit and the sensor unit may be arranged as a block and the gas cartridge may be detachably fixed to the block.

The control unit detecting a fall of the user may be implemented in any known way. Fall protection detection has been used in the past, for example in the context of inflatable helmets. As these helmets detect very similar conditions, the skilled person would be able to adapt the detection algorithms used therein to detect a fall of the user wearing the backpack of the present invention.

The backpack may be configured such that the airbag is brought from the standby state to the inflated state within 0.5 seconds or less, in particular within 0.3 seconds or less, in particular within 0.2 seconds or less, in particular within 0.18 seconds or less, in particular within 0.17 seconds or less. This is referred to as the inflation time in this disclosure.

This ensures that the airbag can properly protect the user upon falling. If the airbag does not inflate in time, it may not cushion the fall enough to reliably avoid injury. It is noted that the inflated state refers to the state of complete inflation.

The time it takes for the airbag to be brought from the standby state to the inflated state depends, for example, on the volume of gas to be delivered into the airbag, on the time it takes for the gas to travel to the various regions of the airbag, and the time it takes for the airbag to extend to the outside of the storage space and inflate into a shape that protects the respective body regions of the user. The latter may, for example, be influenced by the manner the airbag is stowed and/or it may be influenced by how the storage space is configured and arranged and/or how it opens to release the airbag upon inflation. In addition, it may also be influenced by the configuration of the airbag, including, but not limited to the shape of the airbag and additional elements that may influence how the airbag changes shape during inflation. Moreover, the time it takes for the airbag to be brought into an inflated state may also depend on the release module, in particular, the gas cartridge and/or the fall detection performed by the control unit.

Accordingly, several of the features that are presented below may influence, particularly in a synergistic manner, how fast the airbag can be brought from the standby state to the inflated state and, accordingly, how reliable the protection is.

The above-mentioned inflation time excludes the time it takes to detect the fall and trigger release of gas into the airbag. As an example, the time it takes to detect the fall and to trigger release of gas into the airbag may be 0.1 seconds or less, in particular 0.05 seconds or less. In some embodiments, the sum of the inflation time and the time it takes to detect the fall and trigger release of gas into the airbag may be 0.5 seconds or less, in particular 0.3 seconds or less, in particular 0.2 seconds or less.

The backpack is configured such that, upon inflation, at least a first airbag portion of the airbag is released from the storage space, particularly while remaining fixed to the inside of the storage space. The advantage of this is that the airbag, even in an inflated state, will be held in place by the remaining parts of the backpack, which in turn is affixed to the user at a relatively fixed position. Thus, proper protection by the airbag can be ensured by holding it in place even during the dynamic process of inflating the airbag and motion caused by the fall and impact of the user. This is particularly important in the context of the regions that are protected by the airbag because even minor deviations from the position where the airbag should be may lead to the protection being significantly less effective.

The first airbag portion is fixed to the inside of the storage space using a plurality of fixing means, distributed along the length of a first storage portion of the storage space where the first airbag portion is stowed. The first fixing means may comprise buttons and/or toggles and/or velcro fasteners (also known as hook-and-loop fasteners) and/or hooks and/or loops configured to cooperate with buttons and/or toggles and/or button holes configured to cooperate with buttons and/or toggles. The airbag may have a plurality of second fixing means configured to cooperate with the first fixing means so as to fix the first airbag portion to the inside of the storage space.

Using such fixing means allows for a simple and quick assembly and disassembly of the backpack while at the same time ensuring that the airbag will remain in place upon inflation.

The storage space may have an opening through which the first airbag portion extends upon inflation and the backpack may comprise closing means, for example a zipper, a velcro fastener, and/or snaps. The opening may be at least partially, particularly completely, closed by means of the closing means when the airbag is in the standby state.

The closing means may be configured such that the closing means is opened by the airbag pressing against the closing means upon inflation. In particular, the closing means may be a zipper that runs along the opening, particularly along the entire length of the opening, and has at least one, in particular exactly one, burst section, wherein the burst section is arranged at a top of the backpack, centered between shoulder straps of the backpack, in particular vertically above the release module.

This allows for fast and reliable opening of the zipper upon inflation. The flow of gas in the airbag is more turbulent in other sections, such that the pressure at a differently located burst section may not reliably suffice to ensure that the zipper opens in a timely manner.

As mentioned above, the zipper may extend along the entire length of the opening. Using only one zipper that extends along the entire length of the opening reduces the potential failure points regarding opening of the zipper and also allows for smooth and complete opening so as to release the airbag in a reliable manner. However, there may also be more than one burst section. The zipper may, in particular, be a coil zipper, a QuickBurst ^{®} zipper or a Vision ^{®} zipper.

The burst section or each burst section may be covered by means of a piece of cover material. This piece of cover material may be releasably fixed to the outside of the backpack. For example, the piece of cover material may be in the form of a flap that is held closed by means of a velcro fastener in an arrangement so as to cover the burst section. This is a protection mechanism that allows for avoiding tampering or inadvertent opening of the burst section.

The backpack is configured such that, in a standby state, at least part of the first airbag portion is stowed in the storage space within shoulder straps of the backpack.

Arranging part of the airbag in the shoulder straps allows for at least a portion of the airbag that protects the chest region of the user, and potentially also the shoulder region of the user, to be in physical proximity to the region it serves to protect in an inflated state. Accordingly, in case of an accident, it can be ensured that it will quickly protect the user, for example by wrapping around the chest of the user starting from the shoulder straps. Accordingly, the protection is particularly reliable.

The opening of the storage space may be configured to run along the respective edge, particularly an outer edge, of each of the shoulder straps and, optionally, the opening may further be configured to extend from the respective outer edge of each shoulder strap over the front of the shoulder strap towards the inner edge of the shoulder strap at the respective lower end of the opening within the respective shoulder strap.

The opening running along the edge of the shoulder straps allows for the airbag to reliably extend through the opening upon inflation. In particular, when the opening is configured to extend from the respective outer edge of each shoulder strap over the front of the shoulder strap towards the inner edge of the shoulder strap at the lower end of the opening within the respective shoulder strap, this allows for the portion of the shoulder strap that covers the airbag in a deflated state to be pushed away by the airbag upon inflation in a flap-like manner. Thus, release of the airbag from the opening is particularly reliable and fast.

Arrangement of the opening on the outer edge of the shoulder straps facilitates the inflation of the airbag, thereby increasing reliability of the protection of the breast region. The outer edge is also referred to as the outer binding of the shoulder straps. Alternatively, the opening may run along a respective inner edge or inner binding of the shoulder straps.

The part of the first airbag portion that is stored in each of the shoulder straps may be configured to, in an inflated state protect at least the breast region of the user. The storage space and/or the airbag, in the standby state, may be configured to extend at least to the position of the shoulder straps where the chest strap meets the shoulder straps. The storage space and/or the airbag, in the standby state, may be configured to extend up to the upper end of the shoulder straps.

The storage space may be arranged such that, in a standby state, the at least part of the first airbag portion is arranged on top of the lining of the shoulder straps and covered by the upper material of the shoulder straps. In particular, when the airbag is an inflated state, the inner edge of the upper material may remain fixed and the outer edge of the upper material may be released and folded back in a flap like manner by the inflating airbag.

One or both of the shoulder straps may have a portion shaped to guide the airbag's movement upon inflation, for example a flap-shaped portion. Thus inflation of the airbag in the chest area may be improved.

The backpack may be configured such that the position of the chest strap along the length of the shoulder straps is adjustable. For example, the chest strap may be positionable by means of a daisy chain system. The daisy chain system may be combined with a configuration of the backpack wherein a cable runs from the release module through the storage portion within the shoulder straps to a buckle of the chest strap, e.g. the cable and buckle described in more detail below. The daisy chain system is an easy to produce and use system that does not interfere with guiding the cable and does not endanger reliability of the electrical connection.

The release module may comprise a sensor unit comprising one or more sensors, for example an acceleration sensor and/or a gyroscope and/or a magnetometer and/or a barometer, and the control unit may be configured to receive sensor data from the sensor unit and, based on the sensor data, detect of all the fall of the user. As mentioned above, algorithms for fall detection based on sensor data are generally known and the skilled person would be able to suitably adopt a suitable algorithm in this context.

The sensor unit, and optionally the control unit, may be attached to the gas cartridge with a fixed orientation. Keeping the sensor unit in a fixed orientation relative to the main body of the backpack is advantageous for proper fall detection and, as the gas cartridge also has to be fixed with proper orientation, it can be advantageous to attach gas cartridge and sensor unit with a fixed orientation.

The release module may be arranged inside the main compartment of the backpack, particularly adjacent to a back panel of the main compartment of the backpack. This is advantageous because it can be easily accessed and assembled and stabilized properly.

The release module may be removably stowed in an inner compartment inside of the main compartment of the backpack, the inner compartment being attached to a panel of the main compartment, particularly to the back panel, and/or being delimited, at least on one side, by a panel of the main compartment, particularly the back panel.

It is noted that the term "panel" is to be understood broadly, i.e., as the wall of the main compartment. The back panel is the wall that is closest to the user in intended use of the backpack.

The backpack may be configured such that a part of the airbag, i.e., a second airbag portion, extends into the main compartment of the backpack to connect to the gas cartridge, in particular, such that a part of the airbag extends into the inner compartment of the backpack.

In other words, the inner compartment may be a second storage portion of the storage space, the second storage portion being physically connected with the first storage portion, and the airbag, in a standby state, may be arranged so as to extend from the first storage portion into the second storage portion.

The backpack may particularly be configured such that the second airbag portion of the airbag is stowed in the inner compartment together with the release module. In particular, the airbag may be arranged between the panel, in particular the back panel of the main compartment and the release module.

More specifically, in this arrangement, the airbag in the inner compartment may be arranged adjacent to the back panel of the main compartment.

The inner compartment may be closed off from the main compartment by closing means, for example a zipper and/or a velcro fastener, which, for example, may fastens a fabric panel that covers the release module.

The backpack may comprise retaining means, for example a sleeve, arranged inside the inner compartment and configured to retain the release module in particular, so as to hold the gas cartridge in an upright orientation and/or limit an upward motion of the release module, particularly of the gas cartridge. The retaining means may also be seen as holding means and/or stabilizing means.

In the standby state, the airbag may be stowed in the storage space in such a manner that at least part of the airbag, particularly of the first airbag portion mentioned above, is in a folded state, particularly in a fan-shaped folding.

More specifically, at least a part of the airbag, particularly at least a part of the first airbag portion, that is stowed in the storage space within shoulder straps of the backpack, may be in the folded state in the standby state.

The airbag may be configured to have markings, particularly stitches, on its surface, indicating the target position of the folds. This allows for fast and reliable preparation of the airbag for stowing it in the storage space. When the airbag is not reliably prepared and inserted into the storage space, this may prolong the time until the airbag is fully inflated, thereby increasing the response time of the airbag and decreasing the reliability of the protection of the user.

The airbag may be made from a double weave. For example, the double weave may comprise two plies of woven material, wherein the plies are interwoven at outer edges of the airbag. In particular, the airbag may comprise a plurality of interwoven sections arranged and configured so as to bend at least part of the airbag, particularly of the first airbag portion, into shape upon inflation of the airbag, particularly so as to wrap around a cervical spine region, for example a neck region, and/or the chest region and/or the shoulder region upon inflation. In terms of the material of the airbag and fabrication methods of the airbag, materials, systems, and methods known in the art for other airbag systems, particularly those related to fall protection, may be used.

If the airbag did not comprise the plurality of interwoven sections, inflating the airbag into a shape that more reliably protects the user may take longer or may be less reliable. Moreover, it may lead to sharp bends in the inflated airbag. In the area of sharp bends, there is no proper cushioning, such that the reliability of protection is decreased.

In other words, the interwoven sections provide target sections for the airbag to bend around.

The airbag may comprise interwoven sections that run in a vertical direction and/or interwoven sections that run in a horizontal direction, wherein depending on the direction in which the interwoven sections run, bending of the airbag in a horizontal or vertical direction is facilitated. In particular, the airbag may have several rows and columns of interwoven sections, thereby allowing for a gradual bend of the airbag in two directions to properly wrap around the user in an inflated state. As such, the reliability of the protection is increased. Particularly, the interwoven sections may be arranged such that multiple cushions are shaped in the inflated airbag.

The backpack may comprise a buckle of a chest strap and/or a buckle of a hip strap. The backpack may be configured such that the release module is activated when the buckle of the chest strap and/or the buckle of the hip strip is in a closed state and deactivated when the buckle of the chest strap and/or the buckle of the hip strap is in an opened state.

The release module need not be active at all times, for example, when the user is not wearing the backpack. There are several ways in which it is conceivable to activate or deactivate the release module. For example, a button may be used, the arrangement of which is relatively flexible. However, using an activation and deactivation based on whether or not a buckle is closed has the advantage that closing all the buckles when putting on a backpack is part of the movement that the user is used to making upon getting ready to use the backpack, such that the likelihood that the user will forget to activate the release module is reduced compared to when the user has to keep in mind to press a button each time they start using the backpack. Furthermore, upon taking off the backpack, the user cannot forget to deactivate the release module because they have to open the buckle to take off the backpack. Thereby, inadvertent inflation of the airbag can be reliably avoided.

Optionally, the backpack may also have a parking position 26 for at least one part of the buckle, such that, when the backpack is not in use, it can be avoided that the buckle closes inadvertently, thereby activating the release module inadvertently and potentially leading to unintentional inflation of the airbag.

The buckle of the chest strap and/or the buckle of the hip strap may be configured to detect whether it is in a closed state or in an opened state and to provide information indicating whether it is in a closed state or in an opened state to the release module via a data connection. In particular, in case the buckle of the chest strap provides the information, it may be configured to provide the information indicating whether it is in a closed state or in an opened state to the release module via a cable running from the release module to the buckle of the chest strap through the storage space.

Providing the information via cable, in general, has the advantage that it is relatively safe because it is not prone to hacking or accidental shielding or interference of a wireless connection.

However, when using a cable, there is always a risk that the cable will be damaged or that the connection will be severed inadvertently, such that there is a need to lead the cable from the buckle to the sensor unit in a secure fashion. Since the buckle is relatively far removed from the release module when it is arranged inside the main compartment of the backpack, the risk is particularly high as there are many potential areas where the connection could fail. Leading the cable from the buckle through the storage portion where the backpack is arranged has the advantage that said storage portion by definition has to extend almost from the buckle into the main compartment of the backpack where the cartridge that releases gas into the airbag is arranged. Therefore, a relatively protected space already exists that can be used for also guiding the cable securely.

It is noted, that the cable may be arranged inside the storage portion in such a manner, that it does not interfere with inflation of the airbag. Optionally, there may be positioning elements that aid in holding the cable in place.

The buckle of the chest strap and/or the buckle of the hip strap may comprise a magnet and may be configured such that the magnet aids in closing the buckle. The one or both of the shoulder straps and/or hip strap may have a widened, particularly a flap-shaped, portion that is configured to at least partially shield the user from a magnetic field of the magnet. Alternatively or in addition the buckle of the chest strap and/or the buckle of the hip strap may have indicators, for example LEDs, indicating whether the release module is activated and/or whether a gas cartridge is correctly connected with the airbag and/or whether the gas cartridge is empty and/or indicating a battery state of the release module.

Using a magnetic buckle has the advantage of automatically guiding the user towards closing the buckle and also securing the buckle even more against inadvertent opening. Thereby the reliability of the activation of the release module is increased.

One or both of the shoulder straps and/or the hip strap having a widened portion that is configured to at least partially shield the user from the magnetic field of the magnet has the advantage, that the risk of the magnet interfering with electronics used by the user wearing the backpack, in particular a pace maker, is reduced.

Furthermore, when the widened portion of one or both of the shoulder straps is formed in a flap-shaped manner, it also aids in guiding the portion of the airbag that protects the breast of the user upon inflation, thereby improving the reliability of the protection even further.

The backpack may have a, particularly removable, protector plate for protecting the user's back, and the backpack may have a notebook compartment suitable for storing a notebook or tablet computer or other flat oblong object, wherein the notebook compartment may be arranged between the protector plate and the release module, in particular, between the back panel and the protector plate. This not only allows for better usage of storage space, but also allows for avoiding leverage effects that would arise with the release module being stored between the protector and the notebook or other flat oblong object.

The invention also relates to an airbag configured for use in a backpack as described above. The airbag is configured to, upon gas being automatically released into the airbag in response to a fall of the user of the backpack being detected, inflated so as to protect a cervical spine and/or chest region and/or shoulder region of the user wearing the backpack.

The airbag may be made from double weave, for example comprising two plies of woven material, wherein the plies are interwoven at outer edges of the airbag. In particular, the airbag may comprise a plurality of interwoven sections arranged and configured so as to bend at least part of the airbag into shape upon inflation of the airbag, particularly so as to wrap around a cervical spine region, for example a neck region, and/or the chest region and/or the shoulder region upon inflation.

The invention also provides a method for protecting a cervical spine and/or a chest region and/or shoulder region of a user by means of an airbag that, in a standby position, is stowed in the backpack, in particular using one of the backpacks described above. The method comprises automatically detecting a fall of the user of the backpack and, in response to detecting the fall of the user, automatically inflating the airbag by releasing gas from a gas cartridge into the airbag.

The method may further comprise a step of activating a release module that is configured to detect the fall of the user and release gas from the gas cartridge into the airbag when a buckle of a chest strap and/or a buckle of hip strap of the backpack is closed. Alternatively or in addition, the method may comprise a step of deactivating the release module when a buckle of a chest strap and/or a buckle of the hip strap of the backpack is opened.

It is noted that the features and advantages described above in the context of the backpack similarly apply to the above described airbag and to the above described method analogously.

Further features and embodiments and additional advantages are described below making reference to the enclosed figures.

### BRIEF DESCRIPTION OF THE DRAWINGS

In the enclosed figures,
Figure 1 is a schematic, not to scale illustration of an oblique view of a backpack;
Figure 2 is a schematic, not to scale illustration of back view of the backpack;
Figures 3a to 3c are schematic, not to scale illustrations of the backpack when the airbag is in an inflated state;
Figures 4a to 4c are schematic, not to scale illustrations of at least part of the back side of the backpack in partially disassembled states and a detailed view of a buckle;
Figure 5a to 5c are schematic, not to scale illustrations of a top view of the backpack showing part of the storage space;
Figures 6a to 6c are schematic, not to scale illustrations of a main compartment and an inner compartment;
Figures 7a and 7b are schematic, not to scale illustrations of an airbag and release module removed from the storage space, wherein, in Figure 7b some elements are omitted for simplicity and a cable, a chest strap, and a buckle are shown for illustrative purposes; and
Figure 8 is a schematic, not to scale illustration of a release module.

### DETAILED DESCRIPTION

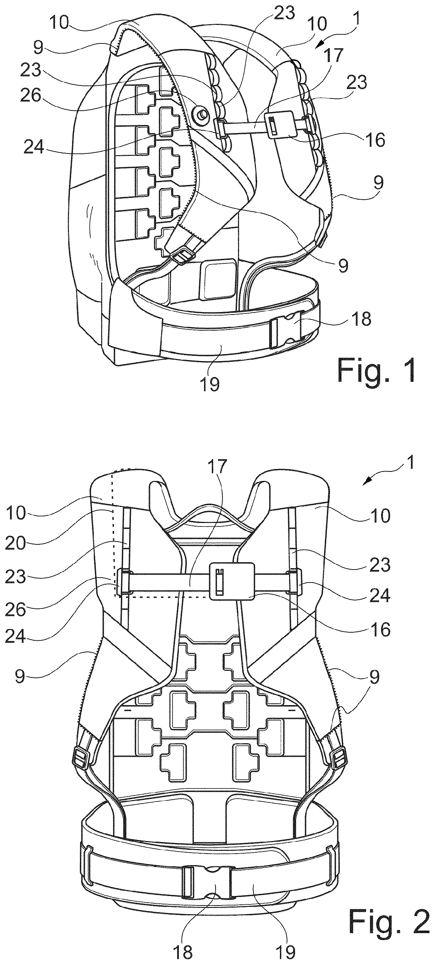

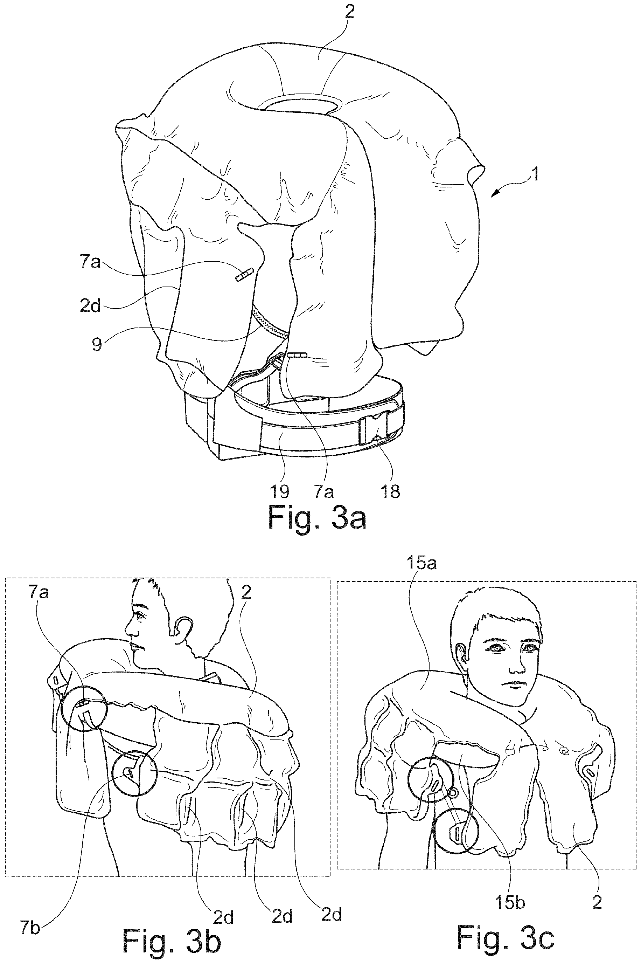

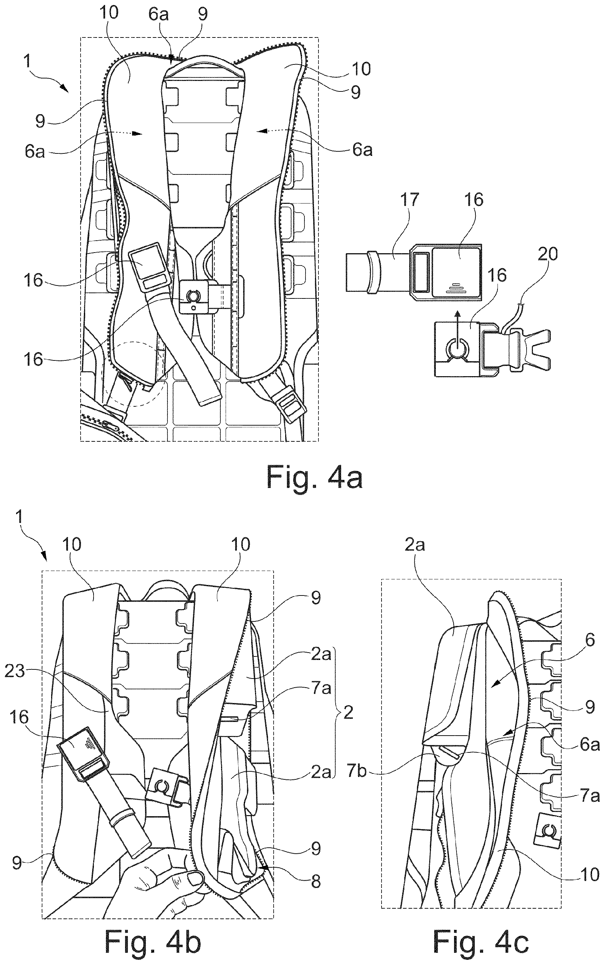

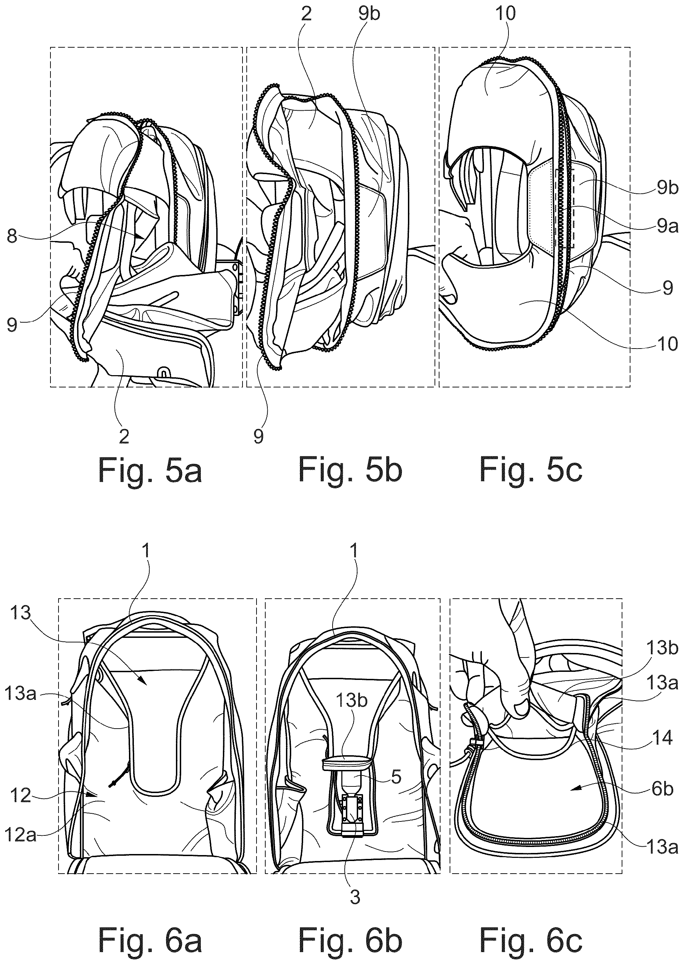

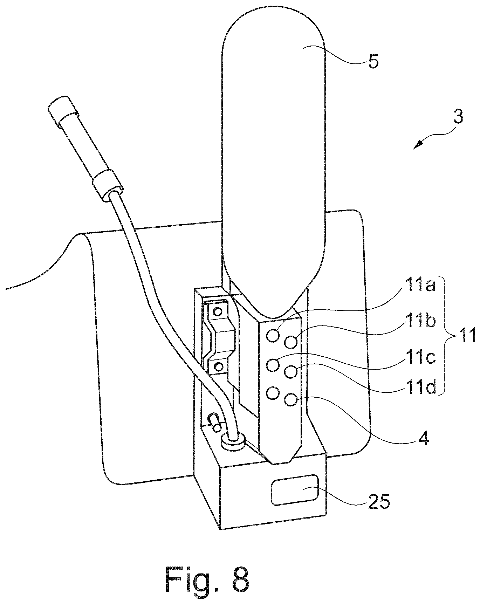

Figures 1 to 8 illustrate different schematic, not to scale views of a backpack 1 and its components.

Not all of the elements that are part of the backpack are visible in all of the views illustrated in the figures. However, it is to be understood that they are nonetheless present, although not visible. Furthermore, it is to be understood that in the following a preferred embodiment is disclosed and the invention is not limited to the features in the combination shown below. That is, several of the features may be optional, in particular, may be omitted or replaced with other features as long as they still fall within the scope of the invention.

Figures 1 to 8 show a backpack 1, having an airbag 2, and a release module 3. The release module comprises a control unit 4 and gas cartridge 5. The gas cartridge may be arranged in an upright orientation, particularly with a portion that is connected to the airbag being arranged at the lower end of the gas cartridge. In the present example, the gas cartridge is arranged centrally, but it may alternatively also be arranged closer to one of the side panels of the main compartment.

The release module also comprises a sensor unit 11, which may comprise an acceleration sensor 11a, a gyroscope 11b, a magnetometer 11c, and a barometer 11d. Backpack also has a storage space 6, different portions of which are visible in some of the figures. In this example, a first airbag portion 2a, which is released from the storage space upon inflation, is stowed in a first portion 6a of the storage space and a second airbag portion 2b is stowed in a second portion 6b of the storage space.

The backpack further comprises fixing means 7a and 7b, that cooperate so as to releasably fix the airbag to the storage space. In this example, the fixing means comprise toggles 7a and button holes 7b that cooperate with the toggles. As an example, the airbag may have several, in this example eight, button holes, which in this example are provided along the first airbag portion 2a. The backpack may comprise several, in this example eight, toggles provided inside the storage space, in particular distributed along the length of the first portion 6a of the storage space.

Other fixing means may be used and the number of fixing means may be different. Moreover, it is also possible to omit fixing means altogether.

As illustrated in the figures, the storage space has an opening 8 through which the first airbag portion extends upon inflation of the airbag. Furthermore, the figures show closing means 9, in this case in the form of a zipper, specifically a single zipper in this example, the zipper being configured to close the opening of the storage space. In the present case, the first portion of the storage space 6a extends along the shoulder straps 10 of the backpack.

At the top of the backpack, in a central position vertically above the release module, a burst section 9a of the zipper is provided. The burst section in this example is covered by means of piece of cover material 9b, e.g., a flap that may be secured, for example, using a velcro fastener.

The storage space 6 in the present example has a second portion 6b that is arranged inside the main compartment 12 of the backpack, more specifically in an inner compartment 13 within the main compartment. The inner compartment can be closed off from the main compartment by closing means 13a, e.g., a zipper, fastening a fabric panel 13b.

Retaining means 14 may be provided inside the inner compartment, for example in the form of a sleeve as shown in the figures, so as to stabilize the release module, particularly the gas cartridge, in an upright orientation and/or limit upward motion of the release module.

In the present embodiment, the airbag may be arranged inside the inner compartment and adjacent to a back panel 12a of the main compartment.

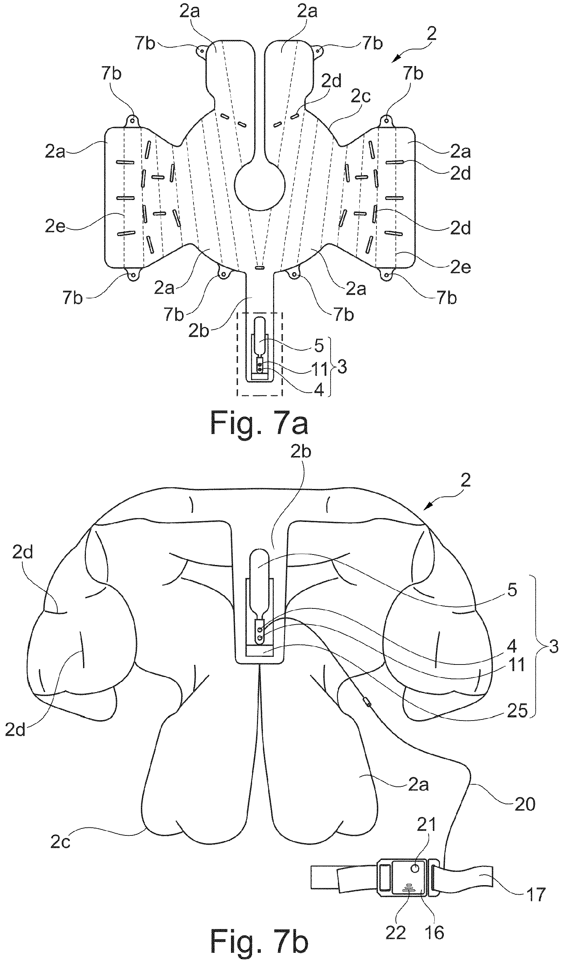

A detailed view of the airbag is shown in Figure 7a, where it can be seen that the airbag is made from a double weave, for example comprising two plies 15a and 15b that are interwoven at the outer edges 2c of the airbag. Moreover, as also shown in Figure 7a, the airbag may comprise interwoven sections 2d.

As can be seen in some of the figures, there are several interwoven sections that extend vertically and several interwoven sections that extend horizontally. As explained above, this ensures that a proper three-dimensional shape is obtained when the airbag inflates.

For example, as shown in Figure 7b, in an inflated state, the airbag takes a three-dimensional shape that resembles several adjacent cushions.

The backpack comprises a buckle 16 of chest strap 17, and a buckle 18 of hip strap 19. A cable 20 may connect at least one of the buckles, in this particular case the buckle 16 of the chest strap, with the release module. As indicated in the figures, the cable 20 may run through the storage space from the buckle to the release module, i.e. it may be accommodated in the storage space together with the airbag in a standby position.

As schematically indicated by means of a circle, at least buckle 16 of the chest strap comprises a magnet 21 that aids in closing the buckle. Moreover, at least buckle 16 of the chest strap comprises an indicator 22, for example comprising LEDs, which is configured to be a status indicator for the status of the release module. Buckle 18 optionally may also comprise a magnet and/or an indicator. However, in the present example it is shown without these elements and is shown as a side-release buckle without magnets or indicators.

It is noted that the backpack may comprise a USB charging port 25 for charging a battery of the release module. The charging port in this embodiment is shown as being located adjacent to the control unit, but other arrangements can be envisioned.

In order to obtain proper protection for the user, the position of the chest strap relative to the shoulder straps may be adjustable. In the backpack as shown in the figures, this is achieved by a daisy chain system by which the chest strap can be fixed in various positions along the shoulder straps. To do so, loops 23 and fixing means 24, for example snap hooks, configured to cooperate with the loops may be provided.

The figures also illustrate how the airbag may be stowed in the storage portion and how the release module may be stored in the inner compartment 13 within the main compartment 12 of the backpack.

As can be seen in the figures, the second airbag portion 2b, the end of which is attached to the release module, is placed in the inner compartment within the main compartment of the backpack, while the main compartment and the inner compartment are open. In this example, the cartridge is inserted from below into a sleeve that opens at least downwardly.

The first airbag portion 2a, which is configured to inflate to protect the user, are arranged in a folded state inside part of the first portion 2a of the storage space, particularly at least in the shoulder straps 10 of the backpack and a part of the storage space extending between the upper ends of the shoulder straps and connecting the parts of the storage space in the shoulder straps.

When closing means 9 for closing the opening of the storage portion, is provided, as part of assembling the backpack, the closing means may be closed after placing the first airbag portion into the storage space.

Furthermore, as part of assembling the backpack, the above-mentioned closing means 13a may be closed so as to close off the inner compartment from the main compartment.

In case there is a cable 20 that runs from the buckle of the chest strap to the release module, upon inserting the airbag in the storage space, particularly in the storage space in the shoulder straps, the cable can be placed inside the storage space together with the airbag. If the airbag is fixed to the inside of the storage space, assembling the backpack, particularly stowing the airbag into the storage space, may also include fixing the airbag to the inside of the storage space using the fixing means 7a and 7b described above.

In the following, an embodiment of an airbag for use in a backpack will be described making reference to Figures 7a and 7b. Some of the features of the airbag 2 described above may similarly apply to the airbag of this embodiment. The airbag is configured to, upon gas being automatically released into the airbag in response to a fall of the user of the backpack being detected, inflate so as to protect a cervical spine, a chest region, and/or a shoulder region of the user wearing the backpack. In the embodiment illustrated in Figures 7a and 7b, due to the configuration of the airbag, all three regions are protected. The airbag is configured for use in a backpack as described above.

In the following, an embodiment of a method will be described, in some cases making reference to the backpack and airbag as illustrated in the figures, for ease of understanding and to better illustrate the method. However, it is noted that the method can also be carried out with any other suitable backpack.

The method according to the present invention includes the step of protecting the cervical spine, chest region, or shoulder region or a combination thereof by means of an airbag, for example the airbag described above, which is stowed in a backpack, for example a backpack as described above, in a standby position. The method comprises the step of automatically detecting a fall of the user of the backpack and, in response to detecting the fall of the user, automatically inflating the airbag by releasing gas from a gas cartridge, for example gas cartridge 5 mentioned above, into the airbag.

The method may comprise the step of activating a release module, for example release module 3 shown in the figures and described above, that is configured to detect the fall of the user and release gas from the gas cartridge into the airbag when a buckle, for example buckle 16 of a chest strap 17 or buckle 18 of a hip strap 19, is closed. Alternatively or in addition, the method may also comprise the step of deactivating the release module when the respective buckle is opened.

More specifically, the user may put on the backpack and close one of the buckles 16 or 18. The buckle may sense whether it is opened or closed and communicate this information to the release module, thereby activating the release module when the buckle is closed and/or deactivating the release module when the buckle is open. When the release module is activated, a processing unit, for example processing unit 4 described above, monitors data from which it can detect a fall of the user. For example, the data that is used for detecting the fall of the user may be obtained by a sensor unit, for example sensor unit 11 described above. When a fall of the user is detected, the processing units triggers release of gas from the gas cartridge into the airbag. This can be achieved, for example, by automatically triggering a punch that opens the fluidic connection between the gas cartridge and the airbag through which gas is released into the airbag. When gas is released into the airbag, the airbag inflates and extends, for example through the opening of the storage space, outside of the storage space so as to protecting a cervical spine and/or a chest region and/or a shoulder region of the user.

The method may optionally comprise deactivating the release module in response to the user opening the buckle of the chest strap and/or the hip strap, e.g., for taking off the backpack after use. When the release module is deactivated, the processing unit will not trigger release of gas from the gas cartridge into the airbag. In particular, deactivating the release module may comprise that the processing unit stops monitoring for a potential fall altogether. In addition, deactivating the release module may comprise deactivating one or more of the sensors of the sensing unit.

Optionally, the method may also comprise, upon closing the buckle that activates the release module, activating an indicator, for example including LEDs, indicating the state of the release module, for example the battery state and/or the presence and/or pressure of the gas cartridge and/or whether the release module is activated.

Optionally, the method may also comprise putting the buckle that activates and/or deactivates the release module in a parking position when the buckle is open, so as to avoid that the buckle inadvertently closes and activates the release module.

The activation and/or deactivation of the release module may also be performed in other ways, for example using an on/off button or any other type of suitable mechanism.

The airbag may optionally be reused after inflation. The method may optionally comprise exchanging the gas cartridge, for example after the airbag has been inflated.

Optionally, the method may also include assembly or disassembly of a backpack, e.g., a backpack as described above. This may include placing the release module and the first airbag portion into an inner compartment inside the main compartment of the backpack, and optionally closing off the inner compartment from the main compartment. It may also include placing, the second airbag portion in the storage space, in particularly in a folded manner, and optionally fixing the first airbag portion in the storage space. It may further include closing the opening of the storage space. Assembly may optionally comprise placing a cable, e.g., the above-mentioned cable 20, inside the storage space together with the airbag. For example, these steps may be performed as already described above in the context of the embodiment describing the backpack. Disassembly may be performed by reversing the steps performed for assembly.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

## Claims

1. Backpack (1) for fall protection comprising an airbag (2) and a release module (3), which comprises a control unit (4) and a gas cartridge (5), wherein the backpack (1) is configured such that
the airbag (2), in a standby state, is deflated and stowed in a storage space (6) of the backpack (1),
the airbag (2) is automatically inflated, in response to the control unit (4) detecting a fall of a user of the backpack (1), by releasing gas from the gas cartridge (5) into the airbag (2), and
the airbag (1), in an inflated state, protects a cervical spine and/or a chest region and/or a shoulder region of the user,
wherein upon inflation at least a first airbag portion (2a) of the airbag (2) is released from the storage space (6), while remaining fixed to the inside of the storage space (6),
wherein, in the standby state, at least part of the first airbag portion (2a), is stowed in the storage space (6) within shoulder straps (10) of the backpack (1), and
wherein the first airbag portion (2a) is fixed to the inside of the storage space (6) using a plurality of fixing means, which are distributed along the length of a first storage portion of the storage space (6) where the first airbag portion (2a) is stowed.

2. Backpack (1) according to claim 1,
wherein the backpack (1) is configured such that the airbag (2) is brought from the standby state to the inflated state within 0.5 seconds or less, in particular within 0.3 seconds or less, in particular within 0.2 seconds or less, in particular within 0.18 seconds or less, in particular within 0.17 seconds or less.

3. Backpack (1) according to claim 1 or claim 2,
wherein the storage space (6) has an opening (8) through which the first airbag portion (2a) extends upon inflation and the backpack (1) comprises closing means (9), for example a zipper (9a), a velcro fastener (9b), and/or snaps (9c), and wherein the opening (8) is at least partially, particularly completely, closed by means of the closing means (9) when the airbag (2) is in the standby state.

4. Backpack (1) according to claim 3,
wherein the closing means (9) is configured such that it is opened by the airbag (2) pressing against the closing means (9) upon inflation,
in particular, wherein the closing means (9) is a zipper that runs along the opening (8) and has at least one, in particular exactly one, burst section (9a), wherein the burst section (9a) is arranged at a top of the backpack (1) and centered between shoulder straps (10) of the backpack (1), particularly vertically above the release module (3).

5. Backpack (1) according to claim 3 or claim 4,
wherein the opening (8) of the storage space (6) is configured to run along a respective edge, particularly an outer edge (10b), of the shoulder straps (10) and, optionally, the opening (8) may further be configured to extend from the respective outer edge (10b) of the shoulder straps (10) over the front (10c) of the shoulder strap (10) towards the inner edge (10d) of the shoulder strap (10) at the respective lower end (10a) of the opening (8) within the respective shoulder strap (10).

6. Backpack (1) according to any of the preceding claims,
wherein the release module (3) comprises a sensor unit (11) comprising one or more sensors (11a, 11b, 11c, 11d), for example an acceleration sensor and/or a gyroscope and/or a magnetometer and/or barometer, and wherein the control unit (4) is configured to receive sensor data from the sensor unit (11) and, based on the sensor data, detect a fall of the user,
in particular, wherein the sensor unit (11), and optionally the control unit (5), is attached to the gas cartridge (5) with a fixed orientation and/or wherein the release module (3) is arranged inside a main compartment (12) of the backpack, particularly adjacent to a back panel (12a) of a main compartment (12) of the backpack (1).

7. Backpack (1) according to any of the preceding claims,
wherein the release module (3) is removably stowed in in an inner compartment (13) inside of the main compartment (12), the inner compartment (13) being attached to a panel of the main compartment (12), particularly to a/the back panel (12a), and/or being delimited, at least on one side, by a panel of the main compartment (12), particularly a/the back panel (12a),
in particular, wherein the backpack (1) is configured such that a second airbag portion (2b) of the airbag (2) is stowed in the inner compartment (13) together with the release module (3), particularly arranged between the panel, particularly a/the back panel (12a), of the main compartment (12) and the release module (3).

8. Backpack (1) according to any of the preceding claims,
wherein, in the standby state, the airbag (2) is inserted in the storage space (6) in such a manner that at least part of the airbag (2), particularly of a/the first airbag portion (2a), is in a folded state, particularly in a fan-shaped folding,
in particular, wherein at least a part of the airbag (2), particularly of the first airbag portion (2a), that is stowed in the storage space (6) within shoulder straps (10) of the backpack (1), is in the folded state in the standby state.

9. Backpack (1) according to any of the preceding claims,
wherein the airbag (2) is made from a double weave, in particular comprising two plies (15a, 15b) of woven material, wherein the plies (15a, 15b) are interwoven at outer edges (2c) of the airbag, in particular, wherein the airbag (2) comprises a plurality interwoven sections (2d) arranged and configured so as to bend at least part of the airbag (2), particularly of a/the first airbag portion (2a), into shape upon inflation of the airbag (2), particularly so as to wrap around a cervical spine region, for example a neck region, and/or the chest region and/or the shoulder region upon inflation.

10. Backpack (1) according to any of the preceding claims, wherein the backpack comprises a buckle (16) of a chest strap (17) and/or a buckle (18) of a hip strap (19), the backpack (1) being configured such that the release module (3) is activated when the buckle (16) of the chest strap (17) and/or the buckle (18) of the hip strap (19) is in a closed state and deactivated when the buckle (16) of the chest strap (17) and/or the buckle (18) of the hip strap (19) is in an opened state,
in particular, wherein the buckle (16) of the chest strap (17) and/or the buckle (18) of the hip strap (19) is configured to detect whether it is in a closed state or in an opened state and to provide information indicating whether it is in a closed state or in an opened state to the release module (3) via a data connection, particularly, in case the buckle (16) of the chest strap (17) provides the information, providing the information via a cable (20) running from the release module (3) to the buckle (16) of the chest strap (17) through the storage space (6).

11. Backpack (1) according to claim 10,
wherein the buckle (16) of the chest strap (17) and/or the buckle (18) of the hip strap (19) comprises a magnet (21) and is configured such that the magnet (21) aids in closing the buckle (16, 18), in particular wherein one or both of the shoulder straps (10) and/or the hip strap (19) has a widened, particularly flap-shaped, portion (22), configured to at least partially shield the user from a magnetic field of the magnet (21), and/or
wherein the buckle (16) of the chest strap (17) and/or the buckle (18) of the hip strap (19) has indicators (22), for example LEDs, indicating whether the release module (3) is activated and/or whether a gas cartridge (5) is correctly connected with the airbag (2) and/or whether the gas cartridge (5) is empty and/or a battery state of the release module (3).

12. An airbag (2) configured for use in the backpack (1) according to any of the preceding claims,
wherein the airbag (2) is configured to, upon gas being automatically released into the airbag (2) in response to a fall of the user of the backpack (1) being detected, inflate so as to protect a cervical spine and/or a chest region and/or a shoulder region of a user wearing the backpack,
wherein the airbag is configured such that upon inflation at least a first airbag portion (2a) of the airbag (2) is released from a storage space (6) of the backpack, while remaining fixed to the inside of the storage space (6), and
wherein the airbag is configured for stowing, in the standby state, at least part of the first airbag portion in a storage space within shoulder straps of the backpack, and
wherein the first airbag portion (2a) is configured to be fixed to the inside of the storage space (6) using a plurality of fixing means, which are distributed along the length of a first storage portion of the storage space (6) where the first airbag portion (2a) is stowed.

13. The airbag (2) of claim 12, wherein the airbag (2) is made from a double weave, in particular comprising two plies (15a, 15b) of woven material, wherein the plies (15a, 15b) are interwoven at outer edges (2c) of the airbag, in particular, wherein the airbag (2) comprises a plurality interwoven sections (2d) arranged and configured so as to bend at least part of the airbag (2) into shape upon inflation of the airbag (2), particularly so as to wrap around a cervical spine region, for example a neck region, and/or the chest region and/or the shoulder region upon inflation.

14. A method for protecting a cervical spine and/or a chest region and/or a shoulder region of a user by means of an airbag (2) that, in a standby position, is stowed in a backpack (1), in particular using the backpack (1) according to any of claim 1 to 11, the method comprising automatically detecting a fall of a user of the backpack (1) and, in response to detecting the fall of the user, automatically inflating the airbag (2) by releasing gas from a gas cartridge (5) into the airbag (2),
wherein upon inflation at least a first airbag portion (2a) of the airbag (2) is released from the storage space (6), while remaining fixed to the inside of the storage space (6),
wherein, in the standby state, at least part of the first airbag portion (2a) is stowed in the storage space (6) within shoulder straps (10) of the backpack (1), and
wherein the first airbag portion (2a) is fixed to the inside of the storage space (6) using a plurality of fixing means, which are distributed along the length of a first storage portion of the storage space (6) where the first airbag portion (2a) is stowed.

15. The method of claim 14 comprising
when a buckle (16) of a chest strap (17) and/or a buckle (18) of a hip strap (19) is closed, activating a release module (3) that is configured to detect the fall of the user and release gas from the gas cartridge (5) into the airbag (2) and/or
when a/the buckle (16) of a/the chest strap (17) and/or a/the buckle (18) of a/the hip strap (19) is opened, deactivating a/the release module (3) that is configured to detect the fall of the user.

## Patentansprüche

1. Rucksack (1) zur Absturzsicherung mit einem Airbag (2) und einem Auslösemodul (3), das eine Steuereinheit (4) und eine Gaskartusche (5) aufweist, wobei der Rucksack (1) so ausgebildet ist, dass
der Airbag (2) in einem Bereitschaftszustand entleert und in einem Stauraum (6) des Rucksacks (1) verstaut ist,
der Airbag (2) automatisch aufgeblasen wird, wenn die Steuereinheit (4) einen Sturz eines Benutzers des Rucksacks (1) feststellt, indem Gas aus der Gaskartusche (5) in den Airbag (2) abgegeben wird, und
der Airbag (1) in einem aufgeblasenen Zustand eine Halswirbelsäule und/oder einen Brustbereich und/oder einen Schulterbereich des Benutzers schützt,
wobei beim Aufblasen mindestens ein erster Airbagabschnitt (2a) des Airbags (2) aus dem Stauraum (6) freigegeben wird, während er an der Innenseite des Stauraums (6) befestigt bleibt,
wobei in dem Bereitschaftszustand zumindest ein Teil des ersten Airbagabschnitts (2a) in dem Stauraum (6) innerhalb von Schultergurten (10) des Rucksacks (1) verstaut ist, und
wobei der erste Airbagabschnitt (2a) an der Innenseite des Stauraums (6) unter Verwendung einer Vielzahl von Befestigungsmitteln befestigt ist, die entlang der Länge eines ersten Stauraumabschnitts des Stauraums (6), in dem der erste Airbagabschnitt (2a) verstaut ist, verteilt sind.

2. Rucksack (1) nach Anspruch 1,
wobei der Rucksack (1) so konfiguriert ist, dass der Airbag (2) innerhalb von 0,5 Sekunden oder weniger, insbesondere innerhalb von 0,3 Sekunden oder weniger, insbesondere innerhalb von 0,2 Sekunden oder weniger, insbesondere innerhalb von 0,18 Sekunden oder weniger, insbesondere innerhalb von 0,17 Sekunden oder weniger aus dem Bereitschaftszustand in den aufgeblasenen Zustand gebracht wird.

3. Rucksack (1) nach Anspruch 1 oder Anspruch 2,
wobei der Stauraum (6) eine Öffnung (8) aufweist, durch die sich der erste Airbagabschnitt (2a) beim Aufblasen erstreckt und der Rucksack (1) ein Verschlussmittel (9), beispielsweise einen Reißverschluss (9a), einen Klettverschluss (9b) und/oder Druckknöpfe (9c), aufweist, und wobei die Öffnung (8) mittels der Verschlussmittel (9) zumindest teilweise, insbesondere vollständig, verschlossen ist, wenn sich der Airbag (2) im Bereitschaftszustand befindet.

4. Rucksack (1) nach Anspruch 3,
wobei das Verschlussmittel (9) so ausgebildet ist, dass es durch den beim Aufblasen gegen das Verschlussmittel (9) drückenden Airbag (2) geöffnet wird,
insbesondere, wobei das Verschlussmittel (9) ein entlang der Öffnung (8) verlaufender Reißverschluss ist, der mindestens einen, insbesondere genau einen, Berstabschnitt (9a) aufweist, wobei der Berstabschnitt (9a) an einer Oberseite des Rucksacks (1) und mittig zwischen Schultergurten (10) des Rucksacks (1), insbesondere senkrecht über dem Auslösemodul (3), angeordnet ist.

5. Rucksack (1) nach Anspruch 3 oder Anspruch 4, wobei die Öffnung (8) des Stauraums (6) so ausgebildet ist, dass sie entlang einer jeweiligen Kante, insbesondere einer Außenkante (10b), der Schultergurte (10) verläuft, und optional die Öffnung (8) ferner so ausgebildet sein kann, dass sie sich von der jeweiligen Außenkante (10b) der Schultergurte (10) über die Vorderseite (10c) des Schultergurts (10) in Richtung der Innenkante (10d) des Schultergurts (10) am jeweiligen unteren Ende (10a) der Öffnung (8) innerhalb des jeweiligen Schultergurts (10) erstreckt.

6. Rucksack (1) nach einem der vorhergehenden Ansprüche,
wobei das Auslösemodul (3) eine Sensoreinheit (11) mit einem oder mehreren Sensoren (11a, 11b, 11c, 11d), beispielsweise einem Beschleunigungssensor und/oder einem Gyroskop und/oder einem Magnetometer und/oder Barometer, aufweist, und wobei die Steuereinheit (4) dazu ausgebildet ist, Sensordaten von der Sensoreinheit (11) zu empfangen und anhand der Sensordaten einen Sturz des Benutzers zu erkennen,
insbesondere, wobei die Sensoreinheit (11) und optional die Steuereinheit (5) an der Gaskartusche (5) mit einer festen Ausrichtung angebracht ist und/oder wobei das Auslösemodul (3) innerhalb eines Hauptfachs (12) des Rucksacks, insbesondere benachbart zu einer Rückwand (12a) eines Hauptfachs (12) des Rucksacks (1), angeordnet ist.

7. Rucksack (1) nach einem der vorhergehenden Ansprüche,
wobei das Auslösemodul (3) in einem Innenfach (13) innerhalb des Hauptfachs (12) herausnehmbar verstaut ist, wobei das Innenfach (13) an einem Feld des Hauptfachs (12), insbesondere an einer/der Rückwand (12a), befestigt ist und/oder zumindest einseitig von einem Feld des Hauptfachs (12), insbesondere einer/der Rückwand (12a), begrenzt ist,
wobei der Rucksack (1) insbesondere so ausgestaltet ist, dass ein zweiter Airbagabschnitt (2b) des Airbags (2) zusammen mit dem Auslösemodul (3) in dem Innenfach (13) verstaut ist, insbesondere angeordnet zwischen der Wand, insbesondere einer/der Rückwand (12a), des Hauptfachs (12) und dem Auslösemodul (3).

8. Rucksack (1) nach einem der vorhergehenden Ansprüche,
wobei der Airbag (2) im Bereitschaftszustand derart in den Stauraum (6) eingesetzt ist, dass zumindest ein Teil des Airbags (2), insbesondere ein/der erste Airbagabschnitt (2a), in einem gefalteten Zustand, insbesondere in einer fächerförmigen Faltung, vorliegt,
wobei insbesondere zumindest ein Teil des Airbags (2), insbesondere des ersten Airbagabschnitts (2a), der in dem Stauraum (6) innerhalb von Schultergurten (10) des Rucksacks (1) verstaut ist, im Bereitschaftszustand in dem gefalteten Zustand ist.

9. Rucksack (1) nach einem der vorhergehenden Ansprüche,
wobei der Airbag (2) aus einem Doppelgewebe hergestellt ist, insbesondere zwei Lagen (15a, 15b) aus gewebtem Material aufweist, wobei die Lagen (15a, 15b) an Außenkanten (2c) des Airbags miteinander verwoben sind, insbesondere wobei der Airbag (2) eine Vielzahl von miteinander verwobenen Abschnitten (2d) aufweist, die so angeordnet und konfiguriert sind, dass sie zumindest einen Teil des Airbags (2) biegen, insbesondere eines/des ersten Airbagabschnitts (2a), beim Aufblasen des Airbags (2) in Form zu biegen, insbesondere so, dass er sich beim Aufblasen um einen Halswirbelsäulenbereich, beispielsweise einen Nackenbereich, und/oder den Brustbereich und/oder den Schulterbereich wickelt.

10. Rucksack (1) nach einem der vorhergehenden Ansprüche, wobei der Rucksack eine Schnalle (16) eines Brustgurtes (17) und/oder eine Schnalle (18) eines Hüftgurtes (19) aufweist, wobei der Rucksack (1) derart ausgestaltet ist, dass das Auslösemodul (3) aktiviert wird, wenn sich die Schnalle (16) des Brustgurtes (17) und/oder die Schnalle (18) des Hüftgurtes (19) in einem geschlossenen Zustand befindet und deaktiviert wird, wenn sich die Schnalle (16) des Brustgurtes (17) und/oder die Schnalle (18) des Hüftgurtes (19) in einem geöffneten Zustand befindet,
wobei insbesondere die Schnalle (16) des Brustgurtes (17) und/oder die Schnalle (18) des Hüftgurtes (19) ausgebildet ist, um zu erkennen, ob sie sich in einem geschlossenen Zustand oder in einem geöffneten Zustand befindet, und um dem Auslösemodul (3) über eine Datenverbindung eine Information zu liefern, die angibt, ob sie sich in einem geschlossenen Zustand oder in einem geöffneten Zustand befindet, insbesondere für den Fall, dass die Schnalle (16) des Brustgurtes (17) die Information bereitstellt, die Information über ein Kabel (20) bereitzustellen, das von dem Auslösemodul (3) zu der Schnalle (16) des Brustgurtes (17) durch den Stauraum (6) verläuft.

11. Rucksack (1) nach Anspruch 10,
wobei die Schnalle (16) des Brustgurtes (17) und/oder die Schnalle (18) des Hüftgurtes (19) einen Magneten (21) aufweist und so ausgestaltet ist, dass der Magnet (21) das Schließen der Schnalle (16, 18) unterstützt, insbesondere wobei einer der Schultergurte (10) und/oder der Hüftgurt (19) oder beide einen verbreiterten, insbesondere klappenförmigen, Abschnitt (22) aufweisen, der so ausgestaltet ist, dass er den Benutzer zumindest teilweise von einem Magnetfeld des Magneten (21) abschirmt, und/oder
wobei die Schnalle (16) des Brustgurtes (17) und/oder die Schnalle (18) des Hüftgurtes (19) Anzeigen (22), z.B. LEDs, aufweist, die anzeigen, ob das Auslösemodul (3) aktiviert ist und/oder ob eine Gaskartusche (5) korrekt mit dem Airbag (2) verbunden ist und/oder ob die Gaskartusche (5) leer ist und/oder einen Batteriezustand des Auslösemoduls (3).

12. Airbag (2), der zur Verwendung in einem Rucksack (1) nach einem der vorhergehenden Ansprüche konfiguriert ist,
wobei der Airbag (2) so konfiguriert ist, dass er sich bei automatischer Freisetzung von Gas in den Airbag (2) als Reaktion auf das Erkennen eines Sturzes des Benutzers des Rucksacks (1) aufbläst, um eine Halswirbelsäule und/oder einen Brustbereich und/oder einen Schulterbereich eines Benutzers, der den Rucksack trägt, zu schützen,
wobei der Airbag so konfiguriert ist, dass beim Aufblasen zumindest ein erster Airbagabschnitt (2a) des Airbags (2) aus einem Stauraum (6) des Rucksacks freigegeben wird, während er an der Innenseite des Stauraums (6) befestigt bleibt, und
wobei der Airbag so konfiguriert ist, dass er im Standby-Zustand zumindest einen Teil des ersten Airbagabschnitts in einem Stauraum innerhalb der Schultergurte des Rucksacks verstaut, und
wobei der erste Airbagabschnitt (2a) konfiguriert ist, um an der Innenseite des Stauraums (6) unter Verwendung einer Vielzahl von Befestigungsmitteln befestigt zu werden, die entlang der Länge eines ersten Stauraumabschnitts des Stauraums (6) verteilt sind, wo der erste Airbagabschnitt (2a) verstaut ist.

13. Airbag (2) nach Anspruch 12, wobei der Airbag (2) aus einem Doppelgewebe hergestellt ist, insbesondere zwei Lagen (15a, 15b) aus gewebtem Material aufweist, wobei die Lagen (15a, 15b) insbesondere an Außenkanten (2c) des Airbags miteinander verwoben sind, wobei der Airbag (2) eine Vielzahl von miteinander verwobenen Abschnitten (2d) aufweist, die so angeordnet und konfiguriert sind, dass sie zumindest einen Teil des Airbags (2) beim Aufblasen des Airbags (2) in Form biegen, insbesondere so, dass sie sich beim Aufblasen um einen Halswirbelsäulenbereich, beispielsweise einen Nackenbereich, und/oder den Brustbereich und/oder den Schulterbereich wickeln.

14. Verfahren zum Schutz einer Halswirbelsäule und/oder eines Brustbereichs und/oder eines Schulterbereichs eines Benutzers mittels eines Airbags (2), der in einer Bereitschaftsposition in einem Rucksack (1) verstaut ist, insbesondere unter Verwendung des Rucksacks (1) nach einem der Ansprüche 1 bis 11, wobei das Verfahren das automatische Erfassen eines Sturzes eines Benutzers des Rucksacks (1) und, in Reaktion auf das Erfassen des Sturzes des Benutzers, das automatische Aufblasen des Airbags (2) durch Freisetzen von Gas aus einer Gaskartusche (5) in den Airbag (2) umfasst,
wobei beim Aufblasen mindestens ein erster Airbagabschnitt (2a) des Airbags (2) aus dem Stauraum (6) freigegeben wird, während er an der Innenseite des Stauraums (6) befestigt bleibt,
wobei in dem Bereitschaftszustand zumindest ein Teil des ersten Airbagabschnitts (2a) in dem Stauraum (6) innerhalb von Schultergurten (10) des Rucksacks (1) verstaut ist, und
wobei der erste Airbagabschnitt (2a) an der Innenseite des Stauraums (6) unter Verwendung einer Vielzahl von Befestigungsmitteln befestigt ist, die entlang der Länge eines ersten Stauraumabschnitts des Stauraums (6), in dem der erste Airbagabschnitt (2a) verstaut ist, verteilt sind.

15. Verfahren nach Anspruch 14, bei dem
wenn eine Schnalle (16) eines Brustgurtes (17) und/oder eine Schnalle (18) eines Hüftgurtes (19) geschlossen ist, Aktivieren eines Auslösemoduls (3), das konfiguriert ist, den Sturz des Benutzers zu erkennen und Gas aus der Gaskartusche (5) in den Airbag (2) freigibt, und/oder
wenn eine/die Schnalle (16) eines/des Brustgurtes (17) und/oder eine/die Schnalle (18) eines/des Hüftgurtes (19) geöffnet wird, das Deaktivieren eines/des Auslösemoduls (3), das konfiguriert ist, den Sturz des Benutzers zu erkennen.

## Revendications

1. Sac à dos (1) pour une protection contre les chutes, comprenant un coussin d'air (2) et un module de libération (3), qui comprend une unité de commande (4) et une cartouche à gaz (5), dans lequel le sac à dos (1) est configuré de telle sorte que
le coussin d'air (2), dans un état d'attente, est dégonflé et rangé dans un espace de stockage (6) du sac à dos (1), le coussin d'air (2) est automatiquement gonflé, en réponse au fait que l'unité de commande (4) détecte une chute d'un utilisateur du sac à dos (1), en libérant du gaz à partir de la cartouche à gaz (5) dans le coussin d'air (2), et
le coussin d'air (1), dans un état gonflé, protège une colonne cervicale et/ou une région thoracique et une région des épaules de l'utilisateur,
dans lequel lors du gonflement, au moins une première portion de coussin d'air (2a) du coussin d'air (2) est libérée de l'espace de stockage (6), tout en restant fixée à l'intérieur de l'espace de stockage (6),
dans lequel, dans l'état d'attente, au moins une partie de la première portion de coussin d'air (2a) est rangée dans l'espace de stockage (6) à l'intérieur de bretelles (10) du sac à dos (1), et
dans lequel la première portion de coussin d'air (2a) est fixée à l'intérieur de l'espace de stockage (6) en utilisant une pluralité de moyens de fixation, qui sont répartis le long de la longueur d'une première portion de stockage de l'espace de stockage (6) où la première portion de coussin d'air (2a) est rangée.

2. Sac à dos (1) selon la revendication 1,
dans lequel le sac à dos (1) est configuré de telle sorte que le coussin d'air (2) est amené de l'état d'attente à l'état gonflé en l'espace de 0,5 seconde ou moins, en particulier en l'espace de 0,3 seconde ou moins, en particulier en l'espace de 0,2 seconde ou moins, en particulier en l'espace de 0,18 seconde ou moins, en particulier en l'espace de 0,17 seconde ou moins.

3. Sac à dos (1) selon la revendication 1 ou la revendication 2,
dans lequel l'espace de stockage (6) a une ouverture (8) à travers laquelle la première portion de coussin d'air (2a) s'étend lors d'un gonflement et le sac à dos (1) comprend des moyens de fermeture (9), par exemple une fermeture à glissière (9a), une attache velcro (9b) et/ou des boutons-pression (9c), et dans lequel l'ouverture (8) est au moins partiellement, en particulier entièrement, fermée par les moyens de fermeture (9) lorsque le coussin d'air (2) est dans l'état d'attente.

4. Sac à dos (1) selon la revendication 3,
dans lequel les moyens de fermeture (9) sont configurés de telle sorte qu'ils sont ouverts par le coussin d'air (2) pressant contre les moyens de fermeture (9) lors du gonflement,
en particulier, dans lequel les moyens de fermeture (9) sont une fermeture à glissière qui court le long de l'ouverture (8) et a au moins une, en particulier exactement une, section d'éclatement (9a), dans lequel la section d'éclatement (9a) est agencée sur un dessus du sac à dos (1) et centrée entre des bretelles (10) du sac à dos (1), en particulier verticalement au-dessus du module de libération (3).

5. Sac à dos (1) selon la revendication 3 ou la revendication 4,
dans lequel l'ouverture (8) de l'espace de stockage (6) est configurée pour courir le long d'un bord respectif, en particulier un bord extérieur (10b), des bretelles (10) et, facultativement, l'ouverture (8) peut en outre être configurée pour s'étendre à partir du bord extérieur (10b) respectif des bretelles (10) sur l'avant (10c) de la bretelle (10) vers le bord intérieur (10d) de la bretelle (10) sur l'extrémité inférieure (10a) respective de l'ouverture (8) à l'intérieur de la bretelle (10) respective.

6. Sac à dos (1) selon l'une quelconque des revendications précédentes,
dans lequel le module de libération (3) comprend une unité de capteurs (11) comprenant un ou plusieurs capteurs (11a, 11b, 11c, 11d), par exemple un capteur d'accélération et/ou un gyroscope et/ou un magnétomètre et/ou un baromètre, et dans lequel l'unité de commande (4) est configurée pour recevoir des données de capteurs provenant de l'unité de capteurs (11) et, sur la base des données de capteurs, détecter une chute de l'utilisateur,
en particulier, dans lequel l'unité de capteurs (11), et facultativement l'unité de commande (5), est fixée à la cartouche à gaz (5) avec une orientation fixe et/ou dans lequel le module de libération (3) est agencé à l'intérieur d'un compartiment principal (12) du sac à dos, en particulier adjacent à un panneau dorsal (12a) d'un compartiment principal (12) du sac à dos (1).

7. Sac à dos (1) selon l'une quelconque des revendications précédentes,
dans lequel le module de libération (3) est rangé de manière amovible dans un compartiment intérieur (13) à l'intérieur du compartiment principal (12), le compartiment intérieur (13) étant fixé à un panneau du compartiment principal (12), en particulier à un/au panneau dorsal (12a), et/ou étant délimité, au moins d'un côté, par un panneau du compartiment principal (12), en particulier un/le panneau dorsal (12a),
en particulier, dans lequel le sac à dos (1) est configuré de telle sorte qu'une seconde portion de coussin d'air (2b) du coussin d'air (2) est rangée dans le compartiment intérieur (13) en association avec le module de libération (3), en particulier agencée entre le panneau, en particulier un/le panneau dorsal (12a), du compartiment principal (12) et le module de libération (3).

8. Sac à dos (1) selon l'une quelconque des revendications précédentes,
dans lequel, dans l'état d'attente, le coussin d'air (2) est inséré dans l'espace de stockage (6) d'une telle manière qu'au moins une partie du coussin d'air (2), en particulier d'une/de la première portion de coussin d'air (2a), est dans un état plié, en particulier selon un pliage en forme d'éventail,
en particulier, dans lequel au moins une partie du coussin d'air (2), en particulier de la première portion de coussin d'air (2a), qui est rangée dans l'espace de stockage (6) à l'intérieur des bretelles (10) du sac à dos (1), est à l'état plié dans l'état d'attente.

9. Sac à dos (1) selon l'une quelconque des revendications précédentes,
dans lequel le coussin d'air (2) est constitué d'une armure double, en particulier comprenant deux plis (15a, 15b) en matériau tissé, dans lequel les plis (15a, 15b) sont entrelacés sur des bords extérieurs (2c) du coussin d'air, en particulier, dans lequel le coussin d'air (2) comprend une pluralité de sections entrelacées (2d) agencées et configurées de manière à plier au moins une partie du coussin d'air (2), en particulier d'une/de la première portion de coussin d'air (2a), pour la mettre en forme lors d'un gonflement du coussin d'air (2), en particulier de manière à envelopper une région de colonne cervicale, par exemple une région du cou et/ou la région thoracique et/ou la région des épaules lors du gonflement.

10. Sac à dos selon l'une quelconque des revendications précédentes, dans lequel le sac à dos comprend une boucle (16) d'une sangle thoracique (17) et/ou une boucle (18) d'une sangle de hanche (19), le sac à dos (1) étant configuré de telle sorte que le module de libération (3) est activé lorsque la boucle (16) de la sangle thoracique (17) et/ou la boucle (18) de la sangle de hanche (19) est dans un état fermé, et désactivé lorsque la boucle (16) de la sangle thoracique (17) et/ou la boucle (18) de la sangle de hanche (19) est dans un état ouvert,
en particulier, dans lequel la boucle (16) de la sangle thoracique (17) et/ou la boucle (18) de la sangle de hanche (19) est configurée pour détecter si elle est dans un état fermé ou dans un état ouvert et pour fournir une information indiquant si elle est dans un état fermé ou dans un état ouvert au module de libération (3) via une connexion de données, en particulier, dans le cas où la boucle (16) de la sangle thoracique (17) fournit l'information, fournir l'information via un câble (20) s'étendant à partir du module de libération (3) jusqu'à la boucle (16) de la sangle thoracique (17) à travers l'espace de stockage (6).

11. Sac à dos (1) selon la revendication 10,
dans lequel la boucle (16) de la sangle thoracique (17) et/ou la boucle (18) de la sangle de hanche (19) comprend un aimant (21) et est configurée de telle sorte que l'aimant (21) aide à fermer la boucle (16, 18), en particulier dans lequel l'une des bretelles (10) ou les deux et/ou la sangle de hanche (19) a une portion élargie, en particulier en forme de rabat (22), configurée pour protéger au moins partiellement l'utilisateur d'un champ magnétique de l'aimant (21), et/ou
dans lequel la boucle (16) de la sangle thoracique (17) et/ou la boucle (18) de la sangle de hanche (19) a des indicateurs (22), par exemple des LED, indiquant si le module de libération (3) est activé et/ou si une cartouche à gaz (5) est correctement reliée au coussin d'air (2) et/ou si la cartouche à gaz (5) est vide et/ou un état de batterie du module de libération (3).

12. Coussin d'air (2) configuré pour une utilisation dans le sac à dos (1) selon l'une quelconque des revendications précédentes,
dans lequel le coussin d'air (2) est configuré pour, lorsque du gaz est automatiquement libérée dans le coussin d'air (2) en réponse à la détection d'une chute de l'utilisateur du sac à dos (1), se gonfler de manière à protéger une colonne cervicale et/ou une région thoracique et/ou une région des épaules d'un utilisateur portant le sac à dos, dans lequel le coussin d'air est gonflé de telle sorte que, lors d'un gonflement, au moins une première portion de coussin d'air (2a) du coussin d'air (2) est libéré d'un espace de stockage (6) du sac à dos, tout en restant fixée à l'intérieur de l'espace de stockage (6), et
dans lequel le coussin d'air est configuré pour ranger, dans l'état d'attente, au moins une partie de la première portion de coussin d'air dans un espace de stockage à l'intérieur de bretelles du sac à dos, et
dans lequel la première portion de coussin d'air (2a) est configurée pour être fixée à l'intérieur de l'espace de stockage (6) en utilisant une pluralité de moyens de fixation, qui sont répartis le long de la longueur d'une première portion de stockage de l'espace de stockage (6) où la première portion de coussin d'air (2a) est rangée.

13. Coussin d'air (2) selon la revendication 12, dans lequel le coussin d'air (2) est fabriqué à partir d'une armure double, en particulier comprenant deux plis (15a, 15b) en matériau tissé, dans lequel les plis (15a, 15b) sont entrelacés sur des bords extérieurs (2c) du coussin d'air, en particulier, dans lequel le coussin d'air (2) comprend une pluralité de sections entrelacées (2d) agencées et configurées de manière à plier au moins une partie du coussin d'air (2) pour la mettre en forme lors d'un gonflement du coussin d'air (2), en particulier de manière à envelopper une région de colonne cervicale, par exemple une région du cou et/ou la région thoracique et/ou la région des épaules lors du gonflement.

14. Procédé pour protéger une colonne cervicale et/ou une région thoracique et/ou une région des épaules d'un utilisateur au moyen d'un coussin d'air (2) qui, dans une position d'attente, est rangé dans un sac à dos (1), en particulier en utilisant le sac à dos (1) selon l'une quelconque des revendications 1à 11, le procédé comprenant de détecter automatiquement une chute d'un utilisateur du sac à dos (1) et, en réponse à la détection de la chute de l'utilisateur, gonfler automatiquement le coussin d'air (2) en libérant du gaz à partir d'une cartouche à gaz (5) dans le coussin d'air (2),
dans lequel, lors du gonflement, au moins une première portion de coussin d'air (2a) du coussin d'air (2) est libérée de l'espace de stockage (6), tout en restant fixée à l'intérieur de l'espace de stockage (6),
dans lequel, dans l'état d'attente, au moins une partie de la première portion de coussin d'air (2a) est rangée dans l'espace de stockage (6) à l'intérieur de bretelles (10) du sac à dos (1), et
dans lequel la première portion de coussin d'air (2a) est fixée à l'intérieur de l'espace de stockage (6) en utilisant une pluralité de moyens de fixation, qui sont répartis le long de la longueur d'une première portion de stockage de l'espace de stockage (6) où la première portion de coussin d'air (2a) est rangée.

15. Procédé sous la revendication 14, comprenant de :
lorsqu'une boucle (16) d'une sangle thoracique (17) et/ou une boucle (18) d'une sangle de hanche (19) est fermée, activer un module de libération (3) qui est configuré pour détecter la chute de l'utilisateur et libérer du gaz à partir de la cartouche à gaz (5) dans le coussin d'air (2) et/ou
lorsqu'une/la boucle (16) d'une/de la bretelle (17) et une/la boucle (18) d'une/de la sangle de hanche (19) est ouverte, désactiver un/le module de libération (3) qui est configuré pour détecter la chute de l'utilisateur.
